# NEW EUROPEAN PATENT SPECIFICATION

(11) **EP 2 348 809 B2**
(45) Date of publication and mention of the opposition decision: **27.05.2020**
(45) Mention of the grant of the patent: 02.01.2013
(21) Application number: 09748355.6
(22) Date of filing: 10.11.2009
(51) Int. Cl.: A01F 15/07

(54) **A BALE-WRAPPING MACHINE**
BALLENUMHÜLLUNGSMASCHINE
MACHINE D'ENRUBANNAGE

(30) Priority: 26.11.2008 IE 20080942
(43) Date of publication of application: 03.08.2011
(73) Proprietor: Idough Investment Company, Co. Carlow (IE)
(72) Inventor: HOURIHANE, Con, Bagenalstown Co. Carlow (IE)
(74) Representative: Tomkins & Co
(86) International application number: PCT/EP2009/064933
(87) International publication number: WO 2010/060793

(56) References cited:
- EP-A1- 1 386 532
- EP-A1- 1 803 345
- DE-A1- 3 311 279
- DE-U1-202005 008 468

## Description

### Field of the Invention

The invention relates to a wrapping machine, in particular to a bale-wrapping machine for use in wrapping bales with a plastics wrapping film, of the kind that are suitable for mounting directly onto the front or rear of a tractor. The invention is particularly concerned with wrapping machines for wrapping bales of agricultural silage, grain, hay, straw, maize, beet pulp, beet tops, and the like (hereinafter referred to as "fodder") with a plastics film, which preferably is air tight and water tight. The device of the invention may also be used in conjunction with machines for compacting and wrapping general farm and agricultural waste products, such as waste plastics and the like, and for wrapping other loose materials and objects such as comminuted peat moss, saw dust, wood shavings, wood chippings, brewery waste, bricks, blocks, cartons and the like.

### Background to the Invention

It has become conventional practice in agriculture to form harvested fodder into cylindrical-shaped bales, commonly called "big round bales", and square or rectangular bales, which are then wrapped in a plastics film. This is particularly suitable method of manufacturing silage because the silage is kept air-tight within the wrapped bale which, typically, is wrapped with up to six plies of plastics film. Machines for wrapping cylindrically shaped bales with a plastics film are described, for example, in GB 2191984 A, GB 2228246A and EP 0208034A (GB 2159489B).

Bale wrapping machines of the kind described in the aforesaid patents comprise a wheeled chassis that may be towed by a tractor. The chassis carries a tipping platform that, in turn, supports a turntable. The turntable is rotatable about a vertical axis. The turntable carries a pair of spaced apart rollers each of which rotates about a horizontal axis. An endless belt is stretched between the rollers and rotates with the rollers. In order to wrap a large round bale of fodder material with plastics film, the round bale is lifted onto the turntable by means of lifting arms. The bale rests on the endless belt. The free end of a roll of plastics film is attached to the bale and the turntable is then rotated about a generally vertical axis to cause the sheet of film to be wrapped around the bale. If no movement of the bale about its longitudinal axis were to occur the bale would merely be wrapped with a single band having the thickness of the width of the plastics film. However, on each rotation of the turntable the endless belt is caused to move for a predetermined distance, which, in turn, causes the bale to roll about its surface, i.e. about a horizontal axis. This rolling of the bale on the belt allows a new area of bale to be wrapped by the film on each rotation of the turntable, thus eventually achieving a complete covering of the bale with a substantial degree of overlap of the plastics film.

In the bale-wrapping machines described above, the bale to be wrapped is mounted on a turntable that rotates about a vertical axis, and the dispenser for the roll of plastics film is fixed. It is the rotation of the bale about the vertical axis that causes the film to be unrolled from the dispenser. However, it is also known from the prior art, for example in EP-B-0110110, DE 3642513A, and GB 2193683A, for the bale to be mounted on rollers that rotate the bale only about the horizontal axis. In this arrangement there is provided a rotary support arm for the film dispenser that rotates the film dispenser, about a vertical axis, around the bale, while the bale is being turned about a horizontal axis.

It is known to provide bale-wrapping machines that may be mounted on the front, rear or forklift or teleporter mounting on a tractor. The advantage of these machines is that they are compact and efficient in use, and less expensive to manufacture than the trailer type described above. An example of such a machine is that described in EP 0 234 763 A1 (Oiestad). This compact-type machine typically comprises at least two rotatable rollers spaced apart a distance less than the diameter of the bale and, in use, being substantially horizontal and intended to support the bale, at least one of the rollers being rotationally driven to rotate the bale about its axis. A rotary support arm or wrap arm rotates a plastics film dispenser about a vertical axis around the bale while the bale is being turned about a horizontal axis. The rollers are arranged as prongs freely projecting from means adapted to be connected to a lifting device mounted on a tractor or other vehicle.

In such compact machines, the projecting rollers are moveable from a first position, in which they can support and rotate the bale to be wrapped, to a second position, in which the rollers are moved apart to release the wrapped bale. The wrapped bale may be dropped on the ground, or by use of the forklift or teleporter mounting of the tractor, the entire wrapping machine may be raised upwards, so that the bale can be released onto a stack of bales. A cut-and-hold mechanism is provided to cut and hold the film when a bale has been completely wrapped. The cut-and-hold mechanism is typically provided behind the bale, and at the end of the wrapping process the wrapping arm is also arranged behind the bale, thereby facilitating bale stacking.

Many conventional bale-wrapping machines are provided with a second rotary wrapping arm, mounted directly opposite the first to apply the plastic evenly to the bale as it is rotated. A film dispenser is provided on each wrapping arm, so that two strips of film are wrapped around the bale simultaneously. Two cut-and-hold devices are provided, one for each strip of film. The use of two wrapping arms allows the speed of the rollers to be increased, thereby increasing the speed at which the bale is rotated about its axis, while still maintaining a 50% overlap of consecutive plies of plastics film. This means that the time taken to wrap a single bale can be shortened by about 40%.

However, it is not practical to provide a compact machine with a second wrapping arm arranged directly opposite the first. In machines with two wrapping arms, when wrapping is complete, the wrapping arms are arranged one on either side of the wrapped bale. Furthermore, a cut-and-hold mechanism is typically provided on each side of the wrapped bale, one for each wrapping arm. This would impede bale stacking in a compact machine.

The bale wrapping machine described in document EP 1 386 532 A1 discloses the subject matter of the preamble of claim 1.

### Summary of the Invention

According to the present invention, there is provided a bale-wrapping machine for wrapping a bale of material with a wrapping material, the machine comprising:
means for engaging a bale for wrapping and for rotating the bale about a substantially horizontal axis;
a main rotary wrapping arm for supplying a first strip of wrapping material to the bale as the bale is turned about the horizontal axis; and
an auxiliary rotary wrapping arm for supplying a second strip of wrapping material to the bale as the bale is turned about the horizontal axis;
wherein the auxiliary wrapping arm is pivotable relative to the main arm, wherein the auxiliary arm is moveable between a 'rest' position, in which it is arranged adjacent to the main arm and the wrapping arms are disposed behind the bale to be wrapped, and a wrapping position, in which the auxiliary arm is arranged substantially opposite the main arm; and
further comprising a single cut-and-hold mechanism wherein the cut-and-hold mechanism is arranged to cut and hold both strips of wrapping material and is arranged behind the bale to be wrapped.

An advantage of this arrangement is that, since two wrapping arms are provided, the wrapping process is speeded up considerably as set out above. A further advantage of the above arrangement is that the auxiliary arm may be brought into the rest position after the bale has been wrapped, to allow for easy release and/or stacking of the bale. This arrangement is particularly useful in compact bale-wrapping machines typically used for stacking bales.

Typically, the bale-wrapping machine may further comprise:
a support frame; and
drive means mounted on the support frame;
wherein the main rotary wrapping arm is driveable by the drive means to rotate both wrapping arms in a circular path about the bale to wrap the bale with the first and second strips of wrapping material.

Alternatively, the auxiliary arm may be driveable by the drive means to rotate both wrapping arms about the bale. In other embodiments, each of the arms may be driven by separate drive means provided on the support frame. The drive means may be operable to move the arms relative to one another between the rest position and the wrapping position.

The auxiliary rotary wrapping arm may be pivotably mounted relative to the main arm or pivotably attached to the main arm. The bale-wrapping machine may comprise means operable to move the auxiliary arm relative to the main arm between the rest position and the wrapping position.

In an embodiment, the means operable to move the auxiliary arm relative to the main arm comprises a linkage or folding mechanism arranged between the main arm and the auxiliary arm, and the linkage mechanism is optionally actuated by a hydraulic or electrical actuator.

The actuator may be a double-action actuator, operable to move the auxiliary arm towards and away from the main arm. The actuator may, for example, be powered in one direction through a rotary coupling on the support frame. The actuator may be reversed by a gas-filled accumulator.

Alternatively, the actuator may be a single-action actuator, operable to move the auxiliary arm in one direction only. In this arrangement, tension applied to the second strip of wrapping material may be used to move the auxiliary arm in the opposite direction.

In another embodiment, the bale-wrapping machine comprises:
spring means arranged between the main arm and the auxiliary arm to hold the auxiliary arm in the wrapping position; and
stop means operable when wrapping is complete to prevent movement of one arm, such that the main arm and the auxiliary arm are brought into the rest position.

In this embodiment, the spring means may comprise a conventional coil spring. However, in a preferred embodiment, the spring means comprises a hydraulic or electrical actuator. The actuator may, for example, be a single-action hydraulic actuator powered by a gas-filled accumulator. In this arrangement, the actuator behaves like a spring, but the speed of the relative movement of the arms into the rest position may be controlled.

Preferably, the stop means is operable to prevent movement of the auxiliary arm.

In the 'rest' or folded position, the wrapping arms are disposed behind the bale to be wrapped. The term 'behind' in this context is intended to indicate that the wrapping arms are arranged between the machine and the bale, or at a machine-facing end of the bale. This further facilitates unloading and/or stacking of bales, since the wrapping arms do not hinder placement of the bale on a stack, or release of a bale from the machine.

The bale-wrapping machine may further comprise means adapted to be connected to a lifting device mounted on a tractor or other vehicle.

### Brief Description of the Drawings

Figure 1 is a perspective view of an embodiment of the bale-wrapping machine of the present invention, with the arms in the rest position; and
Figure 2 is a perspective view of the bale-wrapping machine of Figure 1, with the arms in the wrapping position.

### Detailed Description of the Drawings

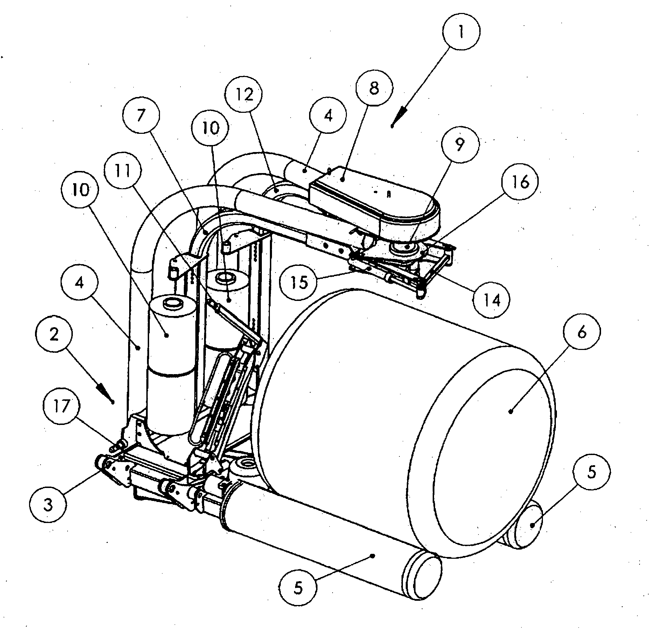

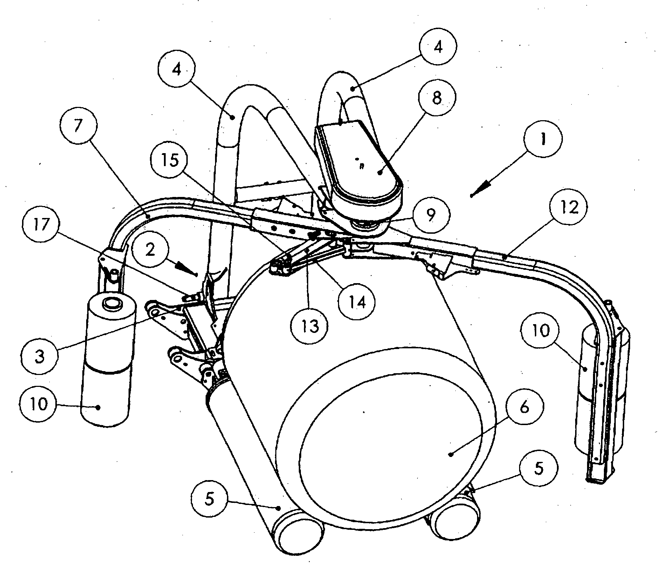

Figures 1 and 2 show a bale-wrapping machine 1 according to an embodiment of the present invention. The machine comprises a support frame 2 having a transverse lower base frame 3 and a pair of tubular masts 4 extending upwardly from the base frame 3. The machine 1 may be coupled to a tractor in a well known manner by means of three-point linkage attachment points 17. For example, the machine 1 may be connected to a lifting device or teleporter mounting on a tractor.

Two rotatable rollers 5 are mounted on and extend forwardly of the base frame 3 and are disposed in predetermined spaced-apart parallel relationship to each other. The rollers 5 can move from an open position in which they may engage the sides of a cylindrical bale 6 of fodder lying on the ground, to a 'closed' position as shown in Figure 1, where they engage the underside of the bale, which is lifted off the ground. By 'closed' is meant that the spacing between the rollers is less than the diameter of the bale 6 to be wrapped. When the bale is in the position shown in Figure 1, the rollers 5 may be rotatably driven to rotate the bale about its substantially horizontal axis.

A main rotary wrapping arm 7 is suspended from a drive unit 8 supported at the end of masts 4. The main arm 7 is connected to the drive shaft 9 which is driven by a hydraulic motor and chain drive. Main arm 7 supports a film dispensing device 10, which may be rotated in a circular path about the bale to wrap the bale with a first strip of plastics film, as the bale 6 is turned about a substantially horizontal axis by the rollers 5. The plastics film is prestretched by the dispenser, in a well-known manner. A known cut-and-tie mechanism 11 is mounted on the frame 3.

An auxiliary rotary wrapping arm 12 is pivotably attached to the main arm 7 by means of a folding mechanism 13. Since the auxiliary arm 12 is attached to the main arm 7, operation of the drive means causes both arms to rotate about the bale. The folding mechanism comprises a linkage 14 and a double-action hydraulic ram or actuator 15. The hydraulic actuator 15 is powered in one direction through a rotary coupling within the drive shaft 9 and reversed by a gas filled accumulator mounted on the other port of the ram. Auxiliary arm 12 supports a film dispensing device 10, which may be rotated in a circular path about the bale to wrap the bale with a second strip of plastics film, as the bale 6 is turned about a substantially horizontal axis by the rollers 5. The plastics film is prestretched by the dispenser, in a well-known manner.

In Figure 1, the machine 1 is shown in the 'rest' or folded position, in which the auxiliary arm 12 is arranged adjacent to the main arm 7. In the 'rest' position, the wrapping arms 7, 12 are disposed behind the bale 6, that is, the arms are disposed between the bale 6 and the support frame 2 of the machine 1 at the machine-facing end of the bale 6. In Figure 2, the machine 1 is shown in the wrapping position, in which the auxiliary arm 12 is arranged opposite the main arm 7.

Before wrapping begins, the arms 7, 12 are arranged in the 'rest' or folded position. To begin wrapping, a bale 6 is lifted onto the rollers 5 as described above. The rollers are rotatably driven to rotate the bale about its horizontal axis. The hydraulic ram 15 is actuated (closed) to pull the auxiliary arm so that it pivots about a pivot point 16 relative to the main arm, from the 'rest' position shown in Figure 1 to the wrapping position shown in Figure 2, in which the auxiliary arm 12 is arranged substantially opposite (i.e. on the opposite side of the bale to) the main arm 7. The auxiliary arm 12 is held in the wrapping position during the wrapping process by the actuator 15. The drive shaft 9 is driven by the drive unit 8 to rotate the arms in a circular path about the bale, as it is turned about its horizontal axis. Thus, the bale is simultaneously wrapped with two strips of wrapping material, thereby speeding up the wrapping process as compared with a single wrap arm machine.

When wrapping is complete, the drive unit 8 brings the arms 7, 12 to a stop such that the main arm 7 is arranged behind the bale as shown in Figure 1. The hydraulic actuator 15 is actuated (extended) to push the auxiliary arm 12 so that it pivots relative to the main arm 7, back to the 'rest' position, in which the wrapping arms 7, 12 are adjacent to one another. In the embodiment shown, a single cut-and-tie (or cut-and-hold) mechanism 11 is used to cut and hold both strips of wrapping material. The rollers 5 may then be opened to release the bale. Because both wrapping arms 7, 12 and the cut-and-hold mechanism 11 are disposed behind the wrapped bale 6 in the 'rest' position, the bale may be released between other wrapped bales or the entire machine 1 may be raised up by means of the teleporter or forklift mounting on a tractor, to allow the bale to be released on top of a stack of bales. Another bale may then be loaded, and the process repeated.

In the embodiment described above, the hydraulic actuator is a double-action hydraulic actuator, which is capable of both pulling and pushing the auxiliary arm between the rest and wrapping positions. In alternative embodiments, the actuator is a single-acting actuator, operable to push (or pull) the auxiliary arm from the rest position to the wrapping position. In this arrangement, the tension on the pre-stretched plastics film is sufficient to pull the auxiliary arm back to the rest or folded position when wrapping is complete.

In an alternative embodiment, the machine 1 may comprise a spring means arranged between the main arm and the auxiliary arm. The spring means is adapted to maintain an opposed arrangement between the main arm and the auxiliary arm, to hold the auxiliary arm in the wrapping position. The arms may be driven by the drive unit 8 to wrap the bale with two strips of wrapping material. The machine 1 may further comprise stop means. When wrapping is complete, the stop means is operable to prevent movement of the auxiliary arm. The main arm continues to be driven by the drive means 8 (against the spring means), so that the main arm continues to move relative to the auxiliary arm, until it 'catches up' with the auxiliary arm in the rest position. Ideally, the stop means is provided on one of the masts 4, so that the arms are brought into the rest position behind the wrapped bale.

In this embodiment, the spring means may comprise a conventional coil spring. Preferably, however, the spring means comprises a hydraulic actuator powered by a gas-filled accumulator. This arrangement behaves similarly to a spring, but the speed of the movement from the wrapping to the rest position may be controlled.

In other embodiments, the auxiliary arm may be driveable by the drive means to rotate both wrapping arms about the bale. Alternatively, each of the arms 7, 12 may be driven by separate drive means provided in the drive unit 8. The drive means may be operable to move the arms relative to one another between the rest position and the wrapping position.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A bale-wrapping machine (1) for wrapping a bale of material with a wrapping material, comprising:
means (5) for engaging a bale (6) for wrapping and for rotating the bale (6) about a substantially horizontal axis;
a main rotary wrapping arm (7) for supplying a first strip of wrapping material to the bale (6) as the bale is turned about the horizontal axis; and
an auxiliary rotary wrapping arm (12) for supplying a second strip of wrapping material to the bale (6) as the bale is turned about the horizontal axis;
wherein the auxiliary arm (12) is pivotable relative to the main arm (7), wherein the auxiliary arm (12) is moveable between a 'rest' position, in which it is arranged adjacent to the main arm (7) and the wrapping arms (7, 12) are disposed behind the bale to be wrapped, and a wrapping position, in which the auxiliary arm (12) is arranged substantially opposite the main arm (7); and
further comprising a single cut-and--hold mechanism (11), wherein the cut-and-hold mechanism is arranged to cut and hold both strips of wrapping material and is arranged behind the bale (6) to be wrapped.

2. A bale- wrapping machine (1) as claimed in claim 1, further comprising:
a support frame; and
drive means mounted on the support frame;
wherein the main rotary wrapping arm (7) is driveable by the drive means to rotate both wrapping arms in a circular path about the bale (6) to wrap the bale with the first and second strips of wrapping material.

3. A bale-wrapping machine (1) as claimed in claim 1 or claim 2, wherein the auxiliary arm (12) is pivotably attached to the main arm (7).

4. A bale- wrapping machine (1) as claimed in claim 3, comprising means operable to move the auxiliary arm (12) relative to the, main arm (7) between the rest position and the wrapping position.

5. A bale-wrapping machine (1) as claimed in claim 4, wherein the means operable to move the auxiliary arm (12) relative to the main arm (7) comprises a linkage mechanism (14) arranged between the main arm (7) and the auxiliary arm (12), and the linkage mechanism (14) is optionally actuated by a hydraulic or electrical actuator.

6. A bale-wrapping machine (1) as claimed in any of claims 1 to 4, further comprising: spring means arranged between the main arm (7) and the auxiliary arm (12) to hold the auxiliary arm (12) in the wrapping position; and stop means operable when wrapping is complete to prevent movement of one arm, such that the main arm (7) and the auxiliary arm (12) are brought into the rest position.

7. A bale-wrapping machine (1) as claimed in claim 6, wherein the stop means is operable to prevent movement of the auxiliary arm (12).

## Patentansprüche

1. Eine Ballenwickelmaschine (1) zum Einwickeln eines Materialballens (6) mit Wickelmaterial, aufweisend:
Mittel (5) für das Aufnehmen eines Ballens (6) zum Einwickeln und Rotieren des Ballens (6) um eine im Wesentlichen horizontale Achse;
einen Hauptrotationswickelarm (7) für das Zuführen eines ersten Streifens von Wickelmaterial an den Ballen (6) während der Ballen um die horizontale Achse gedreht wird; und
einen Hilfsrotationswickelarm (12) für das Zuführen eines zweiten Streifens von Wickelmaterial zu dem Ballen (6) während der Ballen um die horizontale Achse gedreht wird;
wobei der Hilfsarm (12) gegenüber dem Hauptarm (7) schwenkbar ist,
wobei der Hilfsarm (12) bewegbar ist zwischen einer Ruhestellung, in der er benachbart zum Hauptarm (7) angeordnet ist und die Wickelarme (7, 12) hinter dem einzuwickelnden Ballen (6) angeordnet sind, und einer Wickelstellung, in der der Hilfsarm (12) im Wesentlichen gegenüber dem Hauptarm (7) angeordnet ist; und
weiter einen einzelnen Schnitt- und Haltemechanismus (11) aufweisend, wobei der Schnitt- und Haltemechanismus (11) angeordnet ist zum Schneiden und Halten beider Wickelmaterialstreifen und hinter dem einzuwickelnden Ballen (6) angeordnet ist.

2. Eine Ballenwickelmaschine gemäß dem Anspruch 1, ferner aufweisend:
einen Trägerrahmen (2); und
Antriebsmittel (8, 9), die an dem Trägerrahmen (2) angeordnet sind;
wobei der Hauptrotationswickelarm (7) durch die Antriebsmittel (8, 9) derart antreibbar ist, dass beide Wickelarme (7, 12) in einer Kreisbewegung um den Ballen (6) rotieren, sodass der Ballen mit den ersten und zweiten Streifen des Wickelmaterials eingewickelt wird.

3. Eine Ballenwickelmaschine (1) gemäß einem der Ansprüche 1 oder 2, **dadurch gekennzeichnet, dass** der Hilfsarm (12) schwenkbar an dem Hauptarm (7) angeordnet ist.

4. Eine Ballenwickelmaschine (1) gemäß dem Anspruch 3, aufweisend Mittel (14, 15) derart betreibbar, sodass der Hilfsarm (12) relativ zu dem Hauptarm (7) zwischen der Ruhestellung und der Wickelstellung bewegbar ist.

5. Eine Ballenwickelmaschine gemäß Anspruch 4, **dadurch gekennzeichnet, dass** die Mittel (14, 15) derart betreibbar sind, dass der Hilfsarm (12) relativ zu dem Hauptarm bewegbar ist, wobei die Mittel einen Verbindungsmechanismus (14) umfassen, der zwischen dem Hauptarm (7) und dem Hilfsarm (12) angeordnet ist und der Verbindungsmechanismus (14) optional durch einen hydraulischen oder elektrischen Aktuator (15) betätigbar ist.

6. Eine Ballenwickelmaschine (1) gemäß einem der Ansprüche 1 bis 4, ferner aufweisend:
Federmittel, die zwischen dem Hauptarm (7) und dem Hilfsarm (12) angeordnet sind, sodass der Hilfsarm (12) in der Wickelstellung gehalten ist; und
Anschlagmittel, die einsetzbar sind sobald das Einwickeln abgeschlossen ist derart, dass die Bewegung eines Arms verhindert wird, sodass der Hauptarm (7) und der Hilfsarm (12) in die Ruhestellung gebracht werden.

7. Eine Ballenwickelmaschine (1) gemäß dem Anspruch 6, **dadurch gekennzeichnet, dass** die Anschlagmittel zum Verhindern einer Bewegung des Hilfsarms (12) einsetzbar sind.

## Revendications

1. Machine d'enrubannage (1) pour emballer une balle (6) de matériau avec un matériau d'emballage, comprenant :
des moyens (5) pour mettre en prise une balle (6) afin de l'emballer et faire tourner la balle (6) autour d'un axe sensiblement horizontal ;
un bras d'emballage rotatif principal (7) pour fournir une première bande de matériau d'emballage pour la balle (6), lorsqu'elle tourne autour de l'axe horizontal ; et
un bras d'emballage rotatif auxiliaire (12) pour fournir une seconde bande de matériau d'emballage pour la balle (6), lorsque la balle tourne autour de l'axe horizontal ;
dans laquelle le bras auxiliaire (12) peut pivoter par rapport au bras principal (7), dans laquelle le bras auxiliaire (12) est mobile entre une position « de repos » dans laquelle il est agencé de manière adjacente au bras principal (7) et les bras d'emballage (7, 12) sont disposés derrière la balle devant être emballée, et une position d'emballage dans laquelle le bras auxiliaire (12) est agencé sensiblement à l'opposé du bras principal (7) ; et
comprenant en outre un seul mécanisme de coupe et de maintien (11), l'appareil de coupe et de maintien étant agencé pour à la fois couper et maintenir des bandes de matériau d'emballage et étant agencé derrière la balle (6) à emballer.

2. Machine d'enrubannage (1) selon la revendication 1, comprenant en outre :
un châssis de support (2) ; et
des moyens d'entraînement (8, 9) montés sur le châssis de support (2) ;
dans laquelle le bras d'emballage rotatif principal (7) peut être entraîné par les moyens d'entraînement (8, 9) pour faire tourner les deux bras d'emballage (7, 12) sur une trajectoire circulaire autour de la balle (6), pour emballer la balle avec les première et seconde bandes de matériau d'emballage.

3. Machine d'enrubannage (1) selon la revendication 1 ou la revendication 2, dans laquelle le bras auxiliaire (12) est fixé de manière pivotante au bras principal (7).

4. Machine d'enrubannage (1) selon la revendication 3, comprenant des moyens (14, 15) pouvant fonctionner pour déplacer le bras auxiliaire (12) par rapport au bras principal (7) entre la position de repos et la position d'emballage.

5. Machine d'enrubannage selon la revendication 4, dans laquelle les moyens (14, 15) pouvant fonctionner pour déplacer le bras auxiliaire (12) par rapport au bras principal (7) comprennent un mécanisme de liaison (14) agencé entre le bras principal (7) et le bras auxiliaire (12), et le mécanisme de liaison (14) est facultativement actionné par un actionneur hydraulique ou électrique (15).

6. Machine d'enrubannage (1) selon l'une quelconque des revendications 1 à 4, comprenant en outre : des moyens de ressort agencés entre le bras principal (7) et le bras auxiliaire (12) pour maintenir le bras auxiliaire (12) dans la position d'emballage ; et des moyens d'arrêt pouvant fonctionner lorsque l'emballage est terminé, afin d'empêcher le mouvement d'un bras, de sorte que le bras principal (7) et le bras auxiliaire (12) sont amenés dans la position de repos.

7. Machine d'enrubannage (1) selon la revendication 6, dans laquelle les moyens d'arrêt peuvent fonctionner pour empêcher le mouvement du bras auxiliaire (12).
